# FASCICULE DE BREVET EUROPEEN

(11) **EP 3 609 644 B1**
(45) Date de publication et mention de la délivrance du brevet: **09.11.2022**
(21) Numéro de dépôt: 18717133.5
(22) Date de dépôt: 29.03.2018
(51) Int. Cl.: B23B 3/26, B23B 7/02

(54) **MACHINE DE TOURNAGE INVERSÉ**
UMGEKEHRT DREHENDE VORRICHTUNG
INVERSE-TURNING MACHINE

(30) Priorité: 11.04.2017 CH 4892017
(43) Date de publication de la demande: 19.02.2020
(73) Titulaire: Ventura Mecanics SA, 2014 Bôle (CH)
(72) Inventeur: DROZ, Fabrice, 2720 Tramelan (CH); DE MONTE, Pierino, 2504 Bienne (CH); LOEHR, Bernard, 2000 Neuchâtel (CH); NOVO, David, 2013 Colombier (CH)
(74) Mandataire: P&TS SA (AG, Ltd.)
(86) Numéro de dépôt international: PCT/IB2018/052206
(87) Numéro de publication internationale: WO 2018/189612

(56) Documents cités:
- WO-A1-91/14527
- CH-A5- 696 741
- DE-A1- 1 913 377
- DE-A1- 19 921 919
- DE-A1-102011 009 794
- JP-A- S5 570 510

## Description

### Domaine technique

La présente invention concerne une machine de tournage inversé pour le tournage d'une pièce au moyen d'outils tournant autour de la pièce selon le préambule de la revendication 1. Une telle machine de tournage inversé est connue de DE 199 21 919 A1.

### Etat de la technique

Les décolleteuses habituelles comportent une barre tournant au moyen d'une poupée, et plusieurs outils fixes en rotation. Les outils peuvent se déplacer radialement indépendamment les uns des autres afin d'usiner la périphérie de cette barre.

On connait par ailleurs des décolleteuses à tournage inversé, dans lesquelles la matière usinée ne tourne pas, contrairement aux tours usuels. Au lieu de cela, les outils, par exemple, les burins, sont montés sur un mandrin porte-outil qui tourne autour de la barre de matériau à usiner qui reste fixe en rotation. Il est ainsi possible de charger la machine à partir d'une torche de fil métallique souple ce qui évite les pertes de temps pour la recharge des barres et réduit les chutes de matière. Le fil doit être suffisamment fin pour pouvoir être dressé avant de passer dans le canon de guidage.

A titre d'exemple, les décolleteuses automatiques de type Escomatic D2, D4, D5 et D6 (ensemble : Escomatic DX) constituent une famille de décolleteuses à tournage inversé fabriquées depuis plusieurs décennies par la société Esco SA. Les décolleteuses Escomatic D2, D4, D5 ont deux outils de coupe, tandis que les Escomatic D6 ont 3 outils. La construction générale de ces machines est décrite dans la demande CH327038 au nom de ESCO SA.

Le principe d'une telle décolleteuse est aussi illustré dans le brevet français FR1578355. Les décolleteuses Escomatic sont en particulier adaptées au micro-décolletage de pièces de petit diamètre usinées à partir d'un fil suffisamment fin pour être redressé depuis sa position enroulée en torche

La plupart des décolleteuses automatiques Escomatic DX en usage sont des décolleteuses relativement anciennes dont les déplacements sont commandés par des cames. Le déplacement des burins est typiquement commandé par des cames entraînées par une boite à vitesses.

Les utilisateurs de ces décolleteuses manifestent souvent le désir de les remplacer par des machines à commande numériques qui offrent une plus grande souplesse de configuration et sont par exemple mieux adaptées à la fabrication de petites séries. A cet effet, différentes sociétés proposent de remplacer les systèmes de commande à came par des groupes de commande basés sur un ou des servomoteurs contrôlés par une commande numérique.

Un des problèmes à résoudre pour une telle opération de rétrofittage est d'affecter les moteurs aux différents axes à contrôler. Les décolleteuses automatiques de type Escomatic DX comportent un premier axe pour contrôler la position longitudinale de la barre, et un deuxième axe pour contrôler la position de deux outils d'usinage en plongée.

La demande internationale WO2009/000094A1 au nom de Esco SA décrit une machine de décolletage munie de deux actuateurs à commande numérique. Un premier actuateur permet de contrôler l'avance de matière au cours du décolletage. Le deuxième actuateur commande la plongée des outils de décolletage et de coupe.

La demande internationale WO2015124222 décrit un procédé de rétrofittage adapté aux décolleteuses automatiques de type Escomatic DX, dans lequel les deux axes d'une décolleteuse Escomatic DX sont contrôlés au moyen de deux servomoteurs, l'un pour l'avance de la matière et le deuxième pour le contrôle de la plongée des outils.

L'utilisation d'un nombre réduit de servomoteurs permet de réduire les coûts et d'augmenter la fiabilité. La position radiale des outils ne peut cependant pas être contrôlée indépendamment, ce qui rend la fabrication de certaines pièces impossible.

Par ailleurs, ces solutions permettent uniquement un usinage avec deux outils qui doivent être déplacés simultanément. La fabrication de certaines pièces requiert cependant un nombre d'outils plus important, par exemple quatre outils distincts. La fabrication de certaines pièces requiert en outre un déplacement indépendant des différents outils.

### Bref résumé de l'invention

Un des buts de la présente invention est donc de proposer une machine de tournage inversé plus flexible.

Afin de résoudre ce problème, la présente invention propose une machine de tournage inversé selon la revendication 1 comprenant :
un bâti ;
un porte-pièce ;
une poupée porte outil tournant autour de la pièce, et portant au moins trois outils ;
un servomoteur par dit outil, ledit servomoteur étant fixe par rapport au bâti ;
un mécanisme de transmission pour commander à l'aide du servomoteur correspondant la position de chaque outil par rapport à la poupée porte-outil.

Cette machine permet ainsi de commander indépendamment la position d'un nombre d'outils important, au moins trois outils, par exemple quatre outils, et donc de réaliser des pièces complexes.

La machine peut donc comporter au moins 5 axes : un pour l'avance de la matière, et quatre pour la position radiale des quatre outils.

### Brève description des figures

Des exemples de mise en œuvre de l'invention sont indiqués dans la description illustrée par les figures annexées dans lesquelles :
- La figure 1 illustre une vue d'ensemble en perspective d'une machine de tournage inversé conventionnelle.
- La figure 2 illustre une vue de face d'une poupée porte-outils;
- La figure 3 illustre une vue en perspective d'un mécanisme de transmission pour la position de chaque outil par rapport à la poupée porte-outil selon un premier mode de réalisation ;
- La figure 4 illustre une vue en perspective d'un détail du mécanisme de transmission pour la position de chaque outil par rapport à la poupée porte-outil selon un premier mode de réalisation ;
- La figure 5 illustre une vue en perspective d'un mécanisme de transmission pour la position de chaque outil par rapport à la poupée porte-outil selon un deuxième mode de réalisation ;
- La figure 6 illustre une vue en coupe du mécanisme de transmission pour la position de chaque outil par rapport à la poupée porte-outil selon le deuxième mode de réalisation ;
- La figure 7 illustre une vue en éclaté des cônes du mécanisme de transmission selon le deuxième mode de réalisation ;
- La figure 8 illustre une vue en coupe du mécanisme de transmission pour la position de chaque outil par rapport à la poupée porte-outil selon un troisième mode de réalisation ;
- La figure 9 illustre une vue en perspective du mécanisme de transmission pour la position de chaque outil par rapport à la poupée porte-outil selon le troisième mode de réalisation ;
- La figure 10 illustre une vue en perspective du mécanisme de transmission pour la position de chaque outil par rapport à la poupée porte-outil selon le troisième mode de réalisation, un seul disque étant représenté ;
- La figure 11 illustre en perspective un détail du mécanisme de transmission pour la position de chaque outil par rapport à la poupée porte-outil selon le troisième mode de réalisation ;
- La figure 12 illustre en perspective un détail du mécanisme de transmission pour la position de chaque outil par rapport à la poupée porte-outil selon le troisième mode de réalisation.

### Exemple(s) de mode de réalisation de l'invention

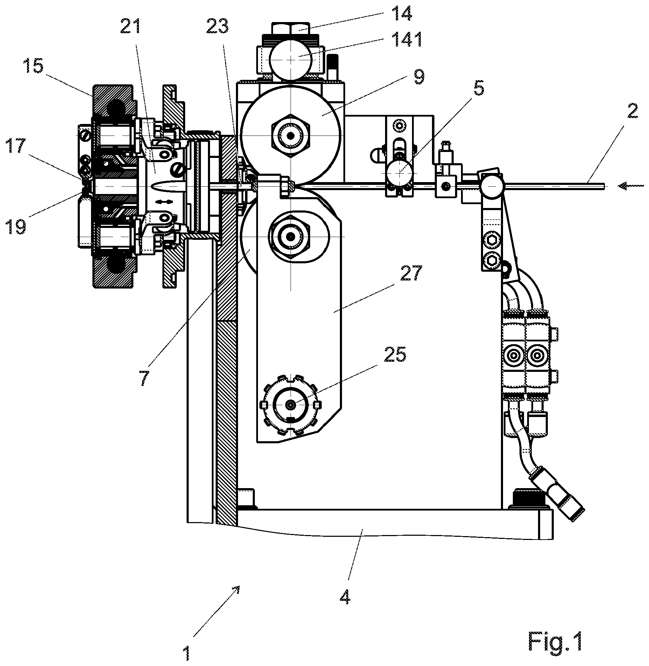

La figure 1 illustre une vue en perspective d'une décolleteuse automatique à tournage inversé 1 conventionnelle, par exemple selon les demandes de brevet CH327038 et/ou WO2015124222, dont le contenu est incorporé par référence. Elle peut être réalisée par exemple par rétrofittage à partir d'une décolleteuse automatique 1 de type Escomatic D2 sur un bâti 4. La matière à usiner 2, par exemple un fil métallique, est enroulée sous forme d'une torche dans un dévidoir non illustré et redressée par un redresseur 5.

La matière à usiner 2 est entraînée par un dispositif d'avance de la matière comportant un disque à rainure inférieur 7 et un disque à rainure supérieur 9 entre lesquels le fil de matière est entraînée. Le disque inférieur 7 est motorisé au moyen d'un servomoteur (deuxième servomoteur). La pression de serrage entre les deux disques peut être ajustée au moyen de l'écrou 14 actionné par le levier 141.

Le fil de matière 2 passe au travers d'un porte-outil (mandrin) rotatif 15 portant dans cet exemple deux burins 17 montés sur des supports 19 perpendiculaires à l'axe de la machine. La matière émerge à l'avant du porte-outil pour être usinée alternativement par l'un puis par l'autre burin. Dans cet art antérieur, le porte-outils 15 est du type illustré dans la demande de brevet EP-A1-0278898, et comporte une douille conique qui peut effectuer des mouvements axiaux en avant ou en arrière afin de commander la position des burins 17.

La position axiale de la douille conique 21 est contrôlée par un autre servomoteur qui commande la position angulaire de l'axe transversal 25 traversant latéralement la décolleteuse. Un levier 27 est monté à l'extrémité distale de cet axe transversal et pivote dans un plan vertical parallèle à l'axe de la machine et au fil 2 lorsque le premier servomoteur 11 est actionné. Il convertit ainsi la rotation de l'axe 25 à la sortie du réducteur en une quasi-translation appliquée à la tige axiale de commande 23 qui est montée à l'extrémité du levier 27. Le levier 27 agit donc comme une bielle afin de commander la position axiale de la tige 23 (et 23') afin de déplacer la douille 21 et donc de commander la plongée des burins 17. Lorsque la douille conique 21 est poussée vers l'avant, un des burins 17 est abaissé en position d'usinage contre la matière 2, tandis que l'autre burin est relevé. Lorsque la douille conique est poussée en sens inverse, le burin 19 est abaissé en position d'usinage contre la matière 2, tandis que l'autre burin 17 est relevé. La profondeur de pénétration du burin actif en position d'usinage est déterminée par la position longitudinale de la douille conique 21. Cette position longitudinale est commandée par la tige axiale de commande 23.

Cette machine de l'art antérieur peut donc utiliser uniquement deux outils, dont les déplacements ne sont pas indépendants. Un seul outil peut travailler à la fois.

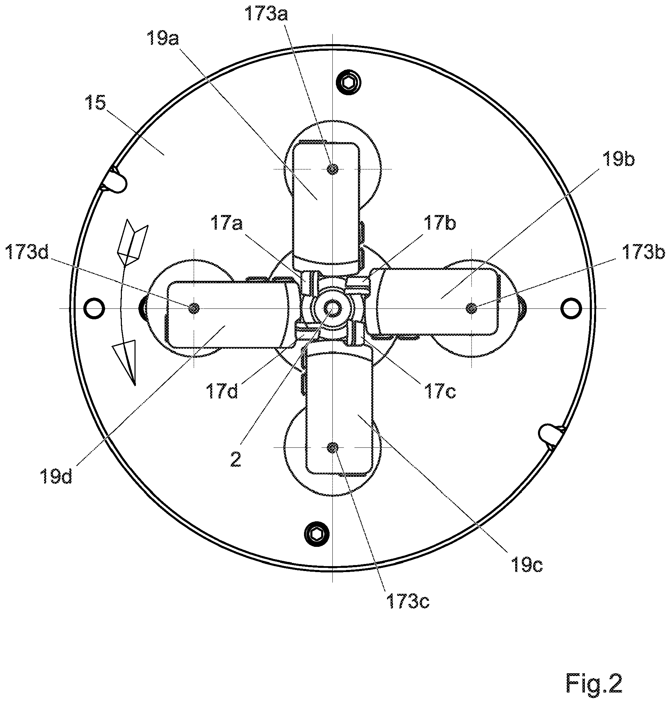

La machine selon l'invention est modifiée en remplaçant au moins le porte-outil 15, ainsi que la boîte de commande de position d'outil. Comme on le voit sur la figure 2, le porte-outil 15 comporte quatre outils 17a à 17d montés sur des supports 19a à 19d et déplaçables individuellement au moyen de quatre servomoteurs indépendants (non illustrés). Chaque servomoteur génère un mouvement de came virtuelle pour chaque outil. La plongée de chaque outil 17a-d se fait avantageusement par une rotation autour d'un axe correspondant 173a-d, chaque outil étant monté transversalement à l'extrémité d'un support d'outil 19a-d équilibré autour de l'axe 173a-d correspondant. Cette rotation permet de réduire les problèmes d'équilibrage du porte-outil que pourrait provoquer un déplacement linéaire de l'outil sur le porte-outil, et qui deviendrait problématique lorsque la poupée porte-outil tourne à grande vitesse, par exemple entre 6'000 et 10'000 tours minute. Un déplacement linéaire d'un ou plusieurs outils est cependant aussi envisageable.

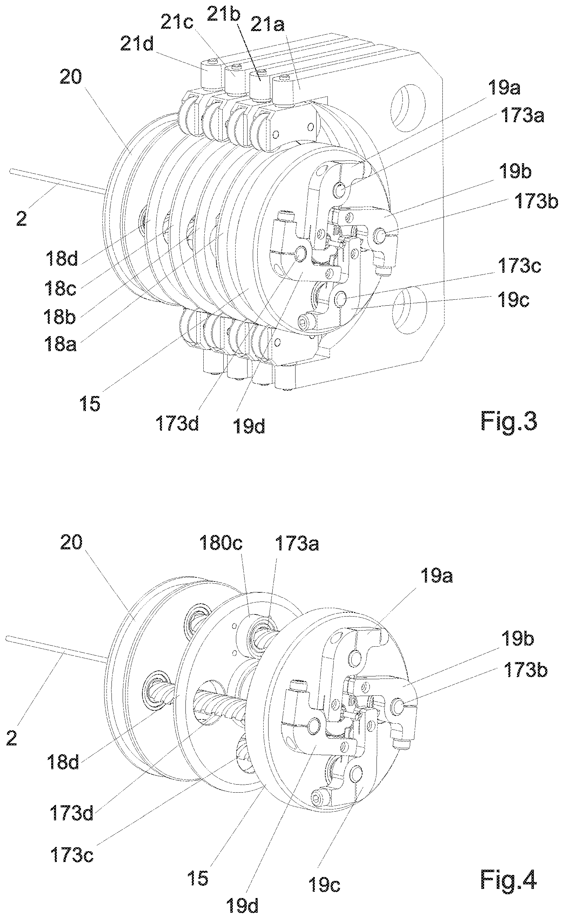

Les figures 3 et 4 illustrent un premier mode de réalisation du mécanisme permettant de commander la rotation des quatre axes 173a-d et donc la plongée des outils 17a-d au moyen de quatre servomoteurs indépendants non représentés. La figure 3 montre le mécanisme complet alors que la figure 4 montre uniquement le mécanisme de contrôle de la position de l'outil 17d, dans un souci de simplification et de lisibilité de la figure. Dans ce mode de réalisation, les axes 173a-d de commande de position des outils traversent le porte-outil 15 et sont munis d'un filetage visible en particulier sur la figure 4. Un disque 18a à 18d muni d'un écrou 180a à 180d permet de contrôler la position angulaire de chaque axe et donc de contrôler la plongée du support 19 et de l'outil 17 correspondant. Chaque écrou 180a à 180d est monté sur un disque 18a à 18d traversé par les autres axes. Les disques 18a à 18d tournent en même temps que le porte-outil 15. Chaque disque peut être déplacé axialement à l'aide d'un ou plusieurs galets montés sur les deux dents d'une fourche 21a à 21d et en appui contre la tranche ou les bords du disque, afin de faire pivoter l'axe correspondant 173a-d et donc de contrôler la position du support d'outil 19a-d correspondant lors de rotation de la fourche. Les disques sont donc mis en rotation autour de la matière à usiner.

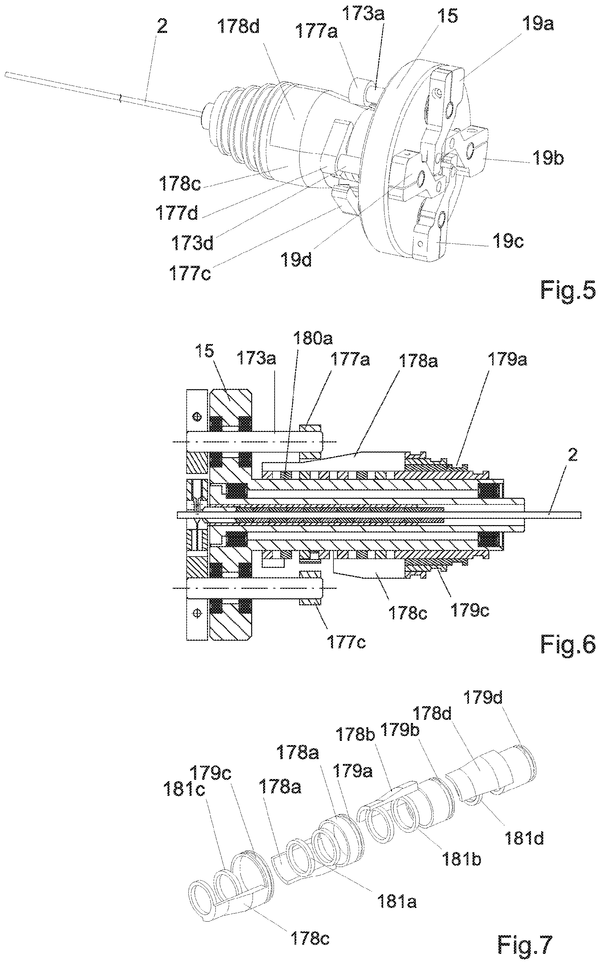

Les figures 5 à 7 illustrent un deuxième mode de réalisation du mécanisme permettant de commander la rotation de quatre axes 173a-d et donc la plongée des outils 17a-d au moyen de quatre servomoteurs indépendants non illustrés. Dans ce mode de réalisation, les axes 173a-d de commande de position des supports d'outils 19a à 19c traversent le porte-outil 15. L'extrémité de chaque axe se termine par un palpeur (ou touche) 173a à 173d respectivement, en appui contre une portion de douille conique 178a à 178d.

Les quatre portions de douille coniques 178a à 178d, correspondant aux quatre outils à commander, couvrent chacune une portion angulaire de 90°. Elles peuvent effectuer des déplacements axiaux en avant ou en arrière afin de faire pivoter le palpeur 177a-d correspondant et ainsi de commander la position des quatre outils 17a-d. Les portions de douilles coniques 178a-d sont guidées sur un tube cylindrique solidaire du porte-outil 15 au moyen d'anneaux 181a à 181d espacés de manière à permettre à une portion de douille de coulisser sans déplacer les autres portions de douille coniques. La commande de la position axiale de chaque portion de douille conique se fait au moyen de fourches non représentées qui permettent de saisir une gorge 179a à 179d ou une autre partie de la portion de douille conique.

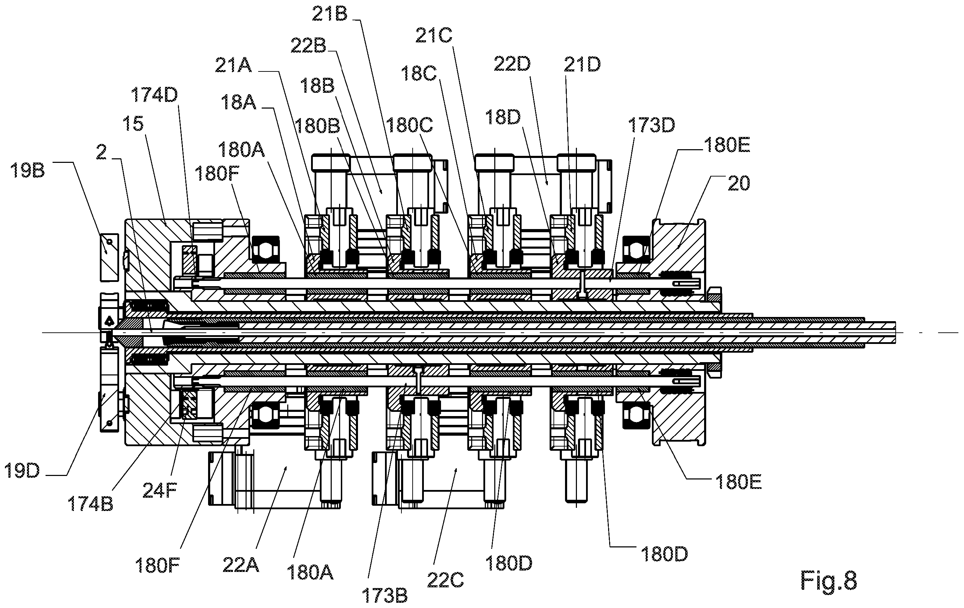

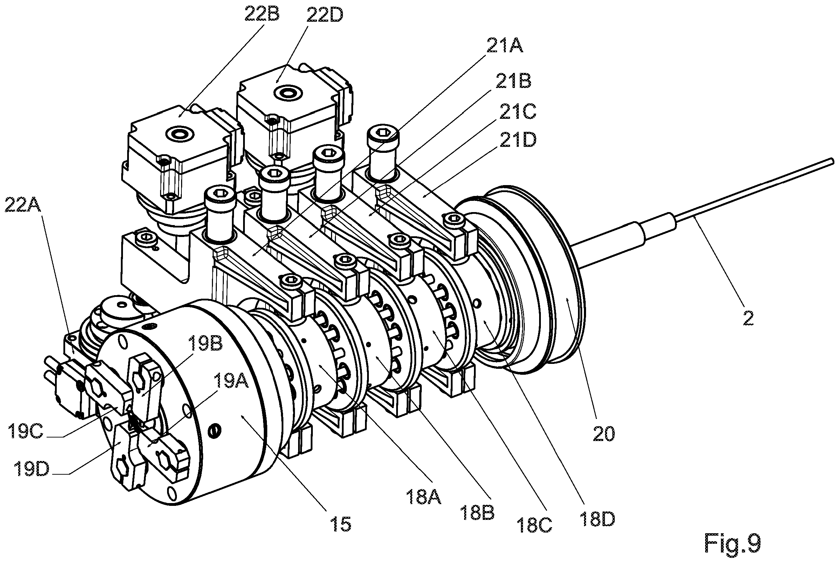

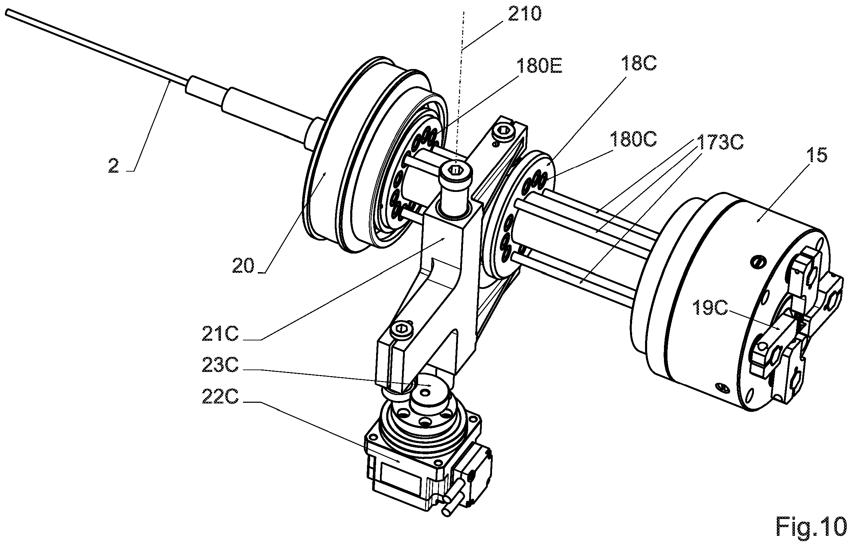

Les figures 8 à 12 illustrent un troisième mode de réalisation du mécanisme permettant de commander la rotation de trois axes 173a-c et donc la plongée des outils 17a-c montés sur des supports 19a-c au moyen de trois servomoteurs indépendants non illustrés. Dans ce mode de réalisation, la profondeur de plongée de chaque outil est déterminée par la position axiale d'un crayon 173a à 173c. Le terme crayon désigne dans ce texte une tige axiale allongée, dont au moins une extrémité du côté des outils est fonctionnalisée. Le mécanisme comporte dans cet exemple neuf crayons disposés sur un cylindre ; trois crayons sont liés à chaque outil, mais un seul détermine sa position. Les deux autres crayons liés à chaque outil sont non fonctionnels mais se déplacent ensemble axialement, afin d'équilibrer les déplacements de masse autour de l'axe du cylindre. Les différents crayons liés à chaque outil sont répartis de manière sensiblement régulière autour du cylindre, par exemple à 120° dans le cas de trois crayons par cylindre. Il est possible de prévoir un mécanisme similaire avec plus de trois outils, par exemple avec quatre outils. Il est possible de lier chaque outil à deux ou quatre crayons équirépartis autour de l'axe du cylindre.

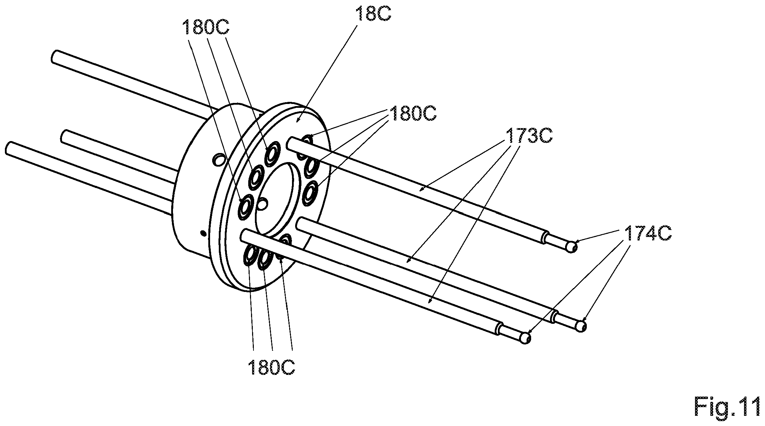

Comme on le voit en particulier sur la figure 11, chaque groupe de crayons 173 liés à un outil est monté sur un corps 18 formé par un disque (rosace). Le déplacement axial du disque provoque le déplacement axial de tous les crayons qui y sont liés. Chaque disque 18 est en outre traversé par des ouvertures traversantes 180 afin de permettre le déplacement axial des crayons liés aux autres outils. Des douilles à billes peuvent être montées dans ces ouvertures traversantes. Les disques et les crayons liés à ces disques sont mis en rotation autour de l'axe du cylindre et de la pièce à usiner, par exemple à une vitesse comprise entre 6'000 et 10'000 tours/minutes.

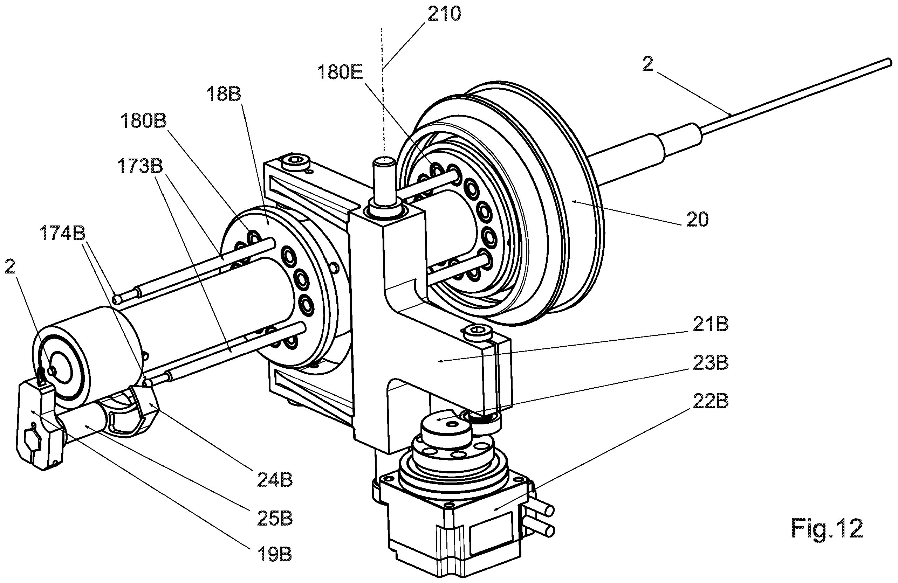

L'extrémité des crayons fonctionnels 173 est conformée en portion de sphère 174. Cette portion de sphère est en contact avec une portion biseauté 24 (figure 12) liée à l'axe 25 de rotation du support 19 de l'outil 17, en sorte que le déplacement axial du crayon 173 provoque la rotation de l'axe 25 et de l'outil 17 lié à cette pièce autour d'un axe de rotation parallèle au crayon. Dans une variante non illustrée, on pourrait imaginer une extrémité des crayons biseautée et agissant sur la position angulaire de l'axe 25.

La position angulaire de chaque disque 18 est commandée par une fourche 21 qui saisit le disque en deux points et qui peut être mise en rotation autour d'un axe 210 perpendiculaire aux axes des crayons. La fourche 21 peut être mise en rotation par un servomoteur 22 entraînant une came 23 dont la position détermine la position angulaire de la fourche 21, et donc la position axiale des crayons liés au disque 18 tenu par cette fourche.

## Revendications

1. Machine de tournage inversé (1) pour le tournage de matière (2) au moyen d'outils (17a, 17b, 17c, 17b) tournant autour de la matière, comprenant :
un bâti (4) ;
un porte-outil (15) agencé pour tourner autour de la matière (2), et portant au moins trois outils (17a, 17b, 17c, 17d) ;
un servomoteur (22a, 22b, 22c,-22d) par outil, le servomoteur étant fixe par rapport au bâti ;
un mécanisme de transmission pour commander, à l'aide du servomoteur correspondant, la position de chaque outil (17a, 17b, 17c, 17d) par rapport au porte-outil (15),
**caractérisé en ce que** le mécanisme de transmission comporte
- au moins trois corps (18a, 18b, 18c, 18d) agencé pour être actionné en rotation autour de la matière, chaque corps étant agencé pour pouvoir être mis en déplacement axial autour de la matière par le servomoteur correspondant (22a, 22b, 22c, 22d), indépendamment des autres corps,
- au moins trois axes (173a, 173b, 173c,173d) traversant ledit porte-outils (15) et tournant avec ledit porte-outil autour de l'axe de rotation du porte-outils (15), un outil étant monté sur chaque axe desdits au moins trois axes,
- chaque axe (173a, 173b, 173c,173d) étant agencé pour être actionné en rotation autour de son propre axe longitudinal par un desdits corps (18a, 18b, 18c, 18d) depuis le côté du porte-outil opposé auxdits outils (17a, 17b, 17c, 17d), indépendamment des autres axes,
- chaque axe commandant le déplacement d'un outil .

2. Machine selon la revendication 1, comportant quatre outils (17a-17d) et quatre corps (18a-d ; 178a-d) en rotation autour de la matière.

3. Machine de tournage selon la revendication 1 ou 2, dans laquelle chaque outil (17a, 17b, 17c, 17b) est déplaçable en rotation sur le porte-outil (15) afin de déterminer sa profondeur de plongée.

4. Machine de tournage selon l'une des revendications 1 à 3, comportant une boîte de commande agencée pour commander les servomoteurs indépendamment les uns des autres, de manière à déplacer chaque outil (17a, 17b, 17c, 17b) indépendamment des autres outils.

5. Machine de tournage selon l'une des revendications 1 à 4, ledit mécanisme de transmission comportant une fourche (21a, 21b, 21c, 21d) par outil (17a, 17b, 17c, 17b), apte à être entraînée par ledit servomoteur pour commander la position axiale dudit corps.

6. Machine de tournage selon la revendication 5, chaque fourche étant apte être mise en rotation par le servomoteur correspondant.

7. Machine de tournage selon l'une des revendications 1 à 6, lesdits axes (173a, 173b, 173c,173d) étant filetés, un écrou (180a, 180b, 180c,180d) étant engagé sur chaque axe pour le faire pivoter en entraînant l'outil, ledit corps étant sous la forme de disques (18a, 18b, 18c, 18d), chaque écrou étant monté sur un desdits disques traversé par les différents axes et dont la position axiale peut être modifiée.

8. Machine de tournage selon la revendication 5 ou 6, lesdits corps étant sous la forme de portions (178a, 178b, 178c, 178d) d'une douille conique montées coaxialement audit porte-outils (15) et pouvant être déplacé axialement au moyen de ladite fourche;
la machine comportant un palpeur (177a, 177b, 177c, 177d) par outil, en appui contre une face externe de la portion de douille conique, et agencé pour pivoter avec ledit axe (173a, 173b, 173c, 173d) lorsque cette portion de douille conique est déplacée axialement.

9. Machine de tournage selon la revendication 5 ou 6, lesdits corps entraînant des crayons (173) déplaçables axialement, l'extrémité axiale desdits crayons étant munie d'un biseau ou agissant sur un biseau (24), afin de faire pivoter lesdits outils (17a-c) lors du déplacement axial du crayon.

10. Machine de tournage selon la revendication 9, comportant au moins trois crayons (173) par outils (17), un seul crayon agissant sur ledit outil, les autres crayons se déplaçant axialement avec ledit crayon agissant sur l'outil afin d'équilibrer les déplacements.

11. Machine de tournage selon la revendication 9 ou 10, lesdits corps étant constitué par des disques (18) liés axialement aux crayons.

## Patentansprüche

1. Umkehrdrehmaschine (1) zum Drehen von Werkstoff (2) mittels Werkzeugen (17a, 17b, 17c, 17b), die sich um den Werkstoff drehen, umfassend:
ein Gestell (4),
einen Werkzeugträger (15), der dazu eingerichtet ist, sich um den Werkstoff (2) zu drehen, und mindestens drei Werkzeuge (17a, 17b, 17c, 17d) trägt,
einen Servomotor (22a, 22b, 22c, 22d) pro Werkzeug, wobei der Servomotor bezüglich des Gestells festliegt,
eine Kraftübertragung zur Steuerung der Position jedes Werkzeugs (17a, 17b, 17c, 17d) bezüglich des Werkzeugträgers (15) mit Hilfe des entsprechenden Servomotors,
**dadurch gekennzeichnet, dass** die Kraftübertragung Folgendes aufweist
- mindestens drei Körper (18a, 18b, 18c, 18d), die dazu eingerichtet sind, drehend um den Werkstoff betätigt zu werden, wobei jeder Körper dazu eingerichtet ist, von dem entsprechenden Servomotor (22a, 22b, 22c, 22d) unabhängig von den anderen Körpern axial um den Werkstoff verlagert zu werden,
- mindestens drei Bolzen (173a, 173b, 173c, 173d), die sich durch den Werkzeugträger (15) erstrecken und sich mit dem Werkzeugträger um die Rotationsachse des Werkzeugträgers (15) drehen, wobei ein Werkzeug an jedem Bolzen der mindestens drei Bolzen montiert ist,
- wobei jeder Bolzen (173a, 173b, 173c, 173d) dazu eingerichtet ist, unabhängig von den anderen Bolzen mittels eines der Körper (18a, 18b, 18c, 18d) von der den Werkzeugen (17a, 17b, 17c, 17d)gegenüberliegenden Seite des Werkzeugträgers drehend um seine eigene Längsachse betätigt zu werden,
- wobei jeder Bolzen die Verlagerung eines Werkzeugs steuert.

2. Drehmaschine nach Anspruch 1, aufweisend vier Werkzeuge (17a - 17d) und vier Körper (18a - d; 178a - d), die sich um den Werkstoff drehen.

3. Drehmaschine nach Anspruch 1 oder 2, wobei jedes Werkzeug (17a, 17b, 17c, 17b) drehend an dem Werkzeugträger (15) verlagerbar ist, um seine Tauchtiefe zu bestimmen.

4. Drehmaschine nach einem der Ansprüche 1 bis 3, aufweisend ein Steuergerät, das dazu eingerichtet ist, die Servomotoren unabhängig voneinander zu steuern, um jedes Werkzeug (17a, 17b, 17c, 17b) unabhängig von den anderen Werkzeugen zu verlagern.

5. Drehmaschine nach einem der Ansprüche 1 bis 4, wobei die Kraftübertragung eine Gabel (21a, 21b, 21c, 21d) pro Werkzeug (17a, 17b, 17c, 17b) aufweist, die dazu eingerichtet ist, von dem Servomotor angetrieben zu werden, um die axiale Position des Körpers zu steuern.

6. Drehmaschine nach Anspruch 5, wobei jede Gabel dazu eingerichtet ist, von dem entsprechenden Servomotor in Drehung versetzt zu werden.

7. Drehmaschine nach einem der Ansprüche 1 bis 6, wobei, da die Bolzen (173a, 173b, 173c, 173d) mit einem Außengewinde versehen sind, an jedem Bolzen eine Mutter (180a, 180b, 180c, 180d) in Eingriff steht, um ihn unter Antreiben des Werkzeugs zum Schwenken zu bringen, wobei der Körper in der Form von Scheiben (18a, 18b, 18c, 18d) vorliegt, wobei jede Mutter an einer der Scheiben montiert ist, die von den verschiedenen Bolzen durchquert wird und deren axiale Position modifiziert werden kann.

8. Drehmaschine nach Anspruch 5 oder 6, wobei die Körper in der Form von Abschnitten (178a, 178b, 178c, 178d) einer konischen Hülse sind und koaxial zu dem Werkzeugträger (15) montiert sind und mittels der Gabel axial verlagert werden können,
wobei die Maschine einen Taster (177a, 177b, 177c, 177d) pro Werkzeug aufweist, der an einer Außenfläche des konischen Hülsenabschnitts anliegt und dazu eingerichtet ist, mit dem Bolzen (173a, 173b, 173c, 173d) zu schwenken, wenn dieser konische Hülsenabschnitt axial verlagert wird.

9. Drehmaschine nach Anspruch 5 oder 6, wobei die Körper axial verlagerbare Stifte (173) antreiben, wobei das axiale Ende der Stifte mit einer Abschrägung versehen ist oder auf einer Abschrägung (24) wirkt, um die Werkzeuge (17a - c) bei der axialen Verlagerung des Stifts zum Schwenken zu bringen.

10. Drehmaschine nach Anspruch 9, aufweisend mindestens drei Stifte (173) pro Werkzeug (17), wobei ein einziger Stift auf das Werkzeug wirkt, wobei die anderen Stifte sich axial mit dem auf das Werkzeug wirkenden Stift verlagern, um die Verlagerungen auszugleichen.

11. Drehmaschine nach Anspruch 9 oder 10, wobei die Körper aus Scheiben (18) bestehen, die axial mit den Stiften verbunden sind.

## Claims

1. Reverse turning machine (1) for turning material (2) by means of tools (17a, 17b, 17c, 17b) rotating around the material comprising:
a frame (4);
a tool holder (15) arranged to rotate around the material (2), and carrying at least three tools (17a, 17b, 17c, 17d)
a servomotor (22a, 22b, 22c, -22d) per tool, the servomotor being fixed with respect to the frame;
a transmission mechanism for controlling, by means of the corresponding servomotor, the position of each tool (17a, 17b, 17c, 17d) relative to the tool holder (15),
**characterized in that** the transmission mechanism comprises
- at least three bodies (18a, 18b, 18c, 18d) arranged to be rotated about the material, each body being arranged to be axially movable about the material by the corresponding servomotor (22a, 22b, 22c, 22d), independently of the other bodies,
- at least three axes (173a, 173b, 173c, 173d) passing through said tool holder (15) and rotating with said tool holder about the axis of rotation of the tool holder (15), one tool being mounted on each of said at least three axes,
- each axis (173a, 173b, 173c, 173d) being arranged to be rotated about its own longitudinal axis by one of said bodies (18a, 18b, 18c, 18d) from the side of the tool holder opposite to said tools (17a, 17b, 17c, 17d), independently of the other axes
- each axis controlling the movement of a tool.

2. Machine according to claim 1, comprising four tools (17a-17d) and four bodies (18a-d; 178a-d) rotating around the material.

3. Turning machine according to claim 1 or 2, wherein each tool (17a, 17b, 17c, 17b) is rotatable on the tool holder (15) to determine its plunge depth.

4. Turning machine according to one of the claims 1 to 3, comprising a control box arranged to control the servomotors independently of each other, so as to move each tool (17a, 17b, 17c, 17b) independently of the other tools.

5. Turning machine according to any of claims 1 to 4, said transmission mechanism comprising a fork (21a, 21b, 21c, 21d) per tool (17a, 17b, 17c, 17d), adapted to be driven by said servomotor for controlling the axial position of said body.

6. Turning machine according to claim 5, each fork being able to be rotated by the corresponding servomotor.

7. Turning machine according to one of the claims 1 to 6, said axes (173a, 173b, 173c, 173d) being threaded, a nut (180a, 180b, 180c, 180d) being engaged on each axis to make it pivot by driving the tool, said body being in the form of disks (18a, 18b, 18c, 18d), each nut being mounted on one of said disks through which the various axes pass and whose axial position can be modified.

8. Turning machine according to claim 5 or 6, said bodies being in the form of portions (178a, 178b, 178c, 178d) of a conical sleeve mounted coaxially to said tool holder (15) and being axially displaceable by means of said fork;
the machine comprising a feeler (177a, 177b, 177c, 177d) per tool, resting against an external face of the conical sleeve portion and arranged to pivot with said axes (173a, 173b, 173c, 173d) when this conical sleeve portion is axially displaced.

9. Turning machine according to claim 5 or 6, said bodies driving axially displaceable pins (173), the axial end of said pins being provided with a bevel or acting on a bevel (24), in order to pivot said tools (17a-c) during the axial displacement of the pin.

10. Turning machine according to claim 9, comprising at least at three pins (173) per tool (17), a single pen acting on said tool, the other pins moving axially with said pin acting on the tool to balance the movements.

11. Turning machine according to claim 9 or 10, said bodies being constituted by disks (18) axially linked to the pins.
